# EUROPEAN PATENT APPLICATION

(11) **EP 1 293 881 A2**
(43) Date of publication of application: **19.03.2003**
(21) Application number: 02019720.8
(22) Date of filing: 03.09.2002
(51) Int. Cl.: G06F 3/033

(54) **A control system with a tactile input field**

(30) Priority: 11.09.2001 DE 10144638
(71) Applicant: TRW Automotive Electronics & Components GmbH & Co. KG, 78315 Radolfzell (DE)
(72) Inventor: Hafner, Ernst, 88709 Hagnau (DE); Bubb, Peter, Dr., 82194 Gröbenzell (DE); Götz, Matthias, 80796 München (DE)
(74) Representative: Degwert, Hartmut, Dipl.-Phys.

(57) **Abstract**

The control system has a touch-sensitive input field (touchpad). Symbols are entered on the surface of the touchpad by tracing rough lines. The lines are interpreted in relation to a particular control context. In each particular control context, only a limited set of a few symbols are valid, thereby permitting symbols to be reliably recognised even when they are traced with a fingertip.

## Description

The present invention relates to a control system wherein control commands are generated by entering symbols on a touch-sensitive input field. The control system can be used in a variety of environments, but a particularly advantageous use is in a vehicle where the driver initiates a control function by entering a symbol on a touch-sensitive input screen.

It is a known procedure to enter alphanumeric symbols such as characters, also handwritten symbols, into small portable data processing devices equipped with a touch-sensitive display screen. In general, a pen, a stylus or the like are used for writing on such a screen. Not only reliable character recognition remains problematic, but a manual entry of symbols without using a sharp object, such as by tracing on the screen with the fingertip, is not possible since only clearly defined lines can be interpreted.

In some applications, however, it would be desirable to permit manual entry of symbols by just tracing on a screen with the fingertip. A typical example is a vehicle environment, especially in view of the driver's need to control more and more complex functions available a modern vehicle.

The invention provides control system wherein control commands are generated by entering symbols on a touch-sensitive input field., Context selecting means are provided for selecting one out of a plurality of different control contexts and associating a limited set of valid symbols with a selected control context. The control system includes a symbol interpreter capable of recognising a symbol entered on the surface of the input field by tracing a rough line with a fingertip, by comparing the line with the set of valid symbols associated with the selected control context. With a fingertip, only relatively rough lines can be traced on the surface of the input field. Reliable symbol recognition is nevertheless ensured by relating each entry to a particular context. The particular context is selected by the user, for example, by scrolling through a menue, by actuating a key, a push-button or the like, by speech control or by entering a symbol on the input field. In any particular context, only a relatively small number of symbols are valid. Therefore, any symbol entered is compared to a small number of symbols that are valid in a particular context, such as by known methods of pattern matching, and a symbol that has been entered is recognised when it satisfies a predefined rate of similarity with one of the valid symbols. Although most environments where the control system will be used typically include a display screen for purposes of entertainment, communication and navigation, and the display screen may be of help to select a particular control context by, for example, scrolling through a menue, it will not be necessary for the driver to look at the display screen while entering a symbol-based control command by roughly tracing with a thumb or fingertip a symbol on the touch-sensitive input field.

In a preferred embodiment, symbol recognition is enhanced by detecting a starting point in each symbol entered on the screen. Typically, when a symbol is entered on a surface by tracing with a fingertip, an initial point of contact can be identified by detecting a location on the screen surface where contact remains stationary for a short time, generally on the order of a fraction of a second. Knowing the starting point of a symbol makes its interpretation easier and more reliable.

Further features and advantages ensue from the following description with reference to the accompanying drawings. In the drawings:
Figure 1 shows a block diagram of a control context selector;
Fig. 2 is a block diagram of a symbol-based control system for use in a vehicle;
Figs. 3 to 5 examples of control context with control functions in the left-hand column and corresponding symbols and commands in the right-hand column; and
Fig. 6 alphanumeric characters and corresponding symbols that are depicted by rough lines.

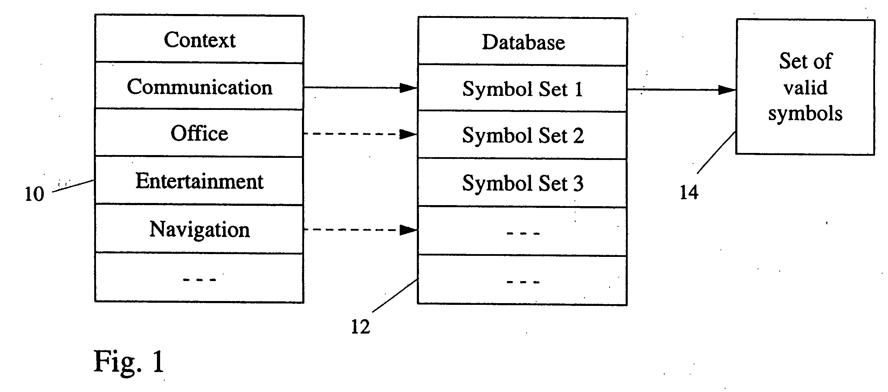

With reference to Fig. 1, a control context selector includes a display screen 10 for displaying a control context menue where a list of available control context options is displayed. A user may scroll through the menue and select a particular control context. In the example shown, a vehicle environment, available control context options are "Communication", "Office", "Entertainment" and "Navigation". When a particular context is selected, a database 12 is searched for an associated set of symbols. A separate, limited set of symbols is stored in database 12 for each of the available context options. Typically, such symbol sets include just a few symbols. As a result, the context selector in Fig. 1 provides a set of valid symbols as shown at reference numeral 14.

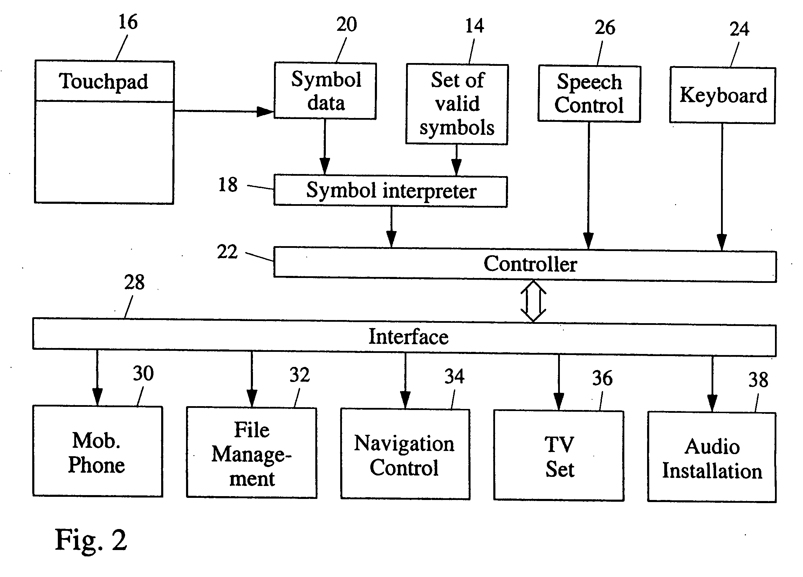

The control system schematically shown in Fig. 2 includes a touchpad 16 and a symbol interpreter 18. Inputs to symbol interpreter 18 are symbol data 20 derived from touchpad 16 and the set of valid symbols, 14. A controller 22 receives inputs from symbol interpreter 18, from a keyboard 24 and from a speech control unit 26. Controller 22 has an output connected to an input of an interface 28. Interface 28 has outputs for driving a mobile phone unit 30, a file management unit 32, a navigation control unit 34, a TV set 36 and an audio installation 38.

In operation, symbol data 20 are generated when a symbol is entered on touchpad 16 by roughly tracing a line with a thumb or fingertip. Symbol data 20 are received by symbol interpreter 18 along with the set of valid symbols, 14. Symbol interpreter 18 uses conventional methods of character recognition such as pattern matching. The match conditions used by symbol interpreter 18 are rather low since only a few symbols are valid, and symbols are thus recognised when they bear just some similarity with any of the valid symbols. Symbols received by controller 22 from symbol interpreter 18 are converted to control commands sent to interface 28, and interface 28 will generate appropriate drive signals to the units connected to its outputs. In addition to symbols from symbol interpreter 18, controller 22 may receive and process input from keyboard 24 and from speech control unit 26.

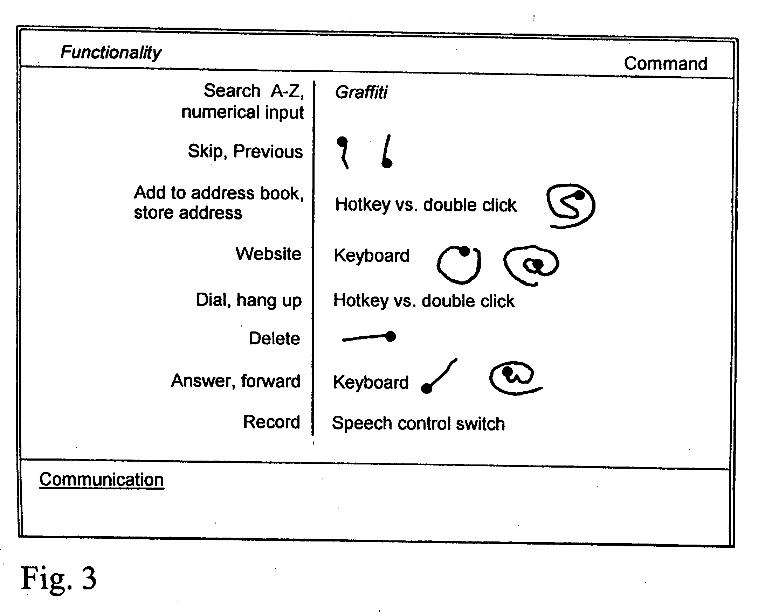

Referring now to Fig. 3, a control context that may be available in a vehicle is "Communication". Typical functionality of this context is listed in the left-hand column of Fig. 3, and available command options are listed in the right-hand column. These command options include symbols that may be entered on touchpad 16. As an alternative, commands may be entered with keyboard 24 or speech control unit 26, depending on the circumstances. For example, the vehicle driver should only use symbol entry and speech control, whereas a passenger would want to use keyboard 24 in addition or alternatively.

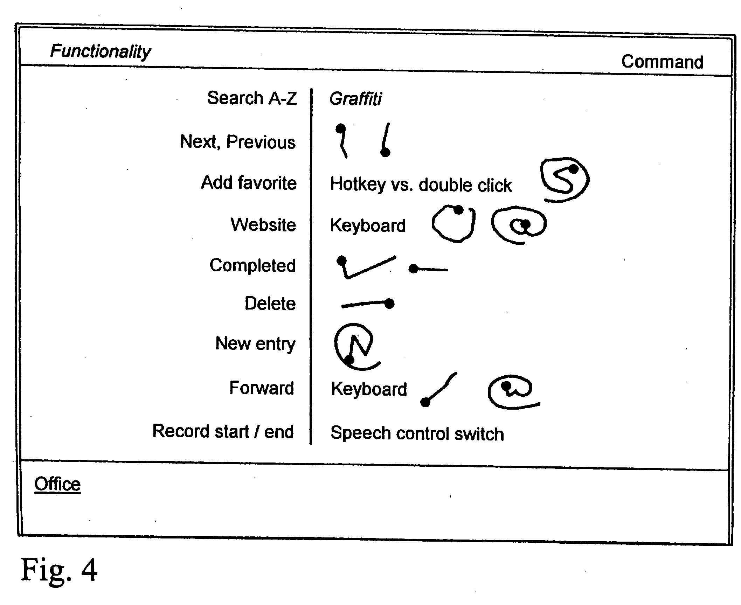

The control context shown in Fig. 4 is "Office". As in Fig. 3, functionality is listed in the left-hand column, and available command options are listed in the right-hand column. Some of the functionality and command options may be identical with those of other context options, as required.

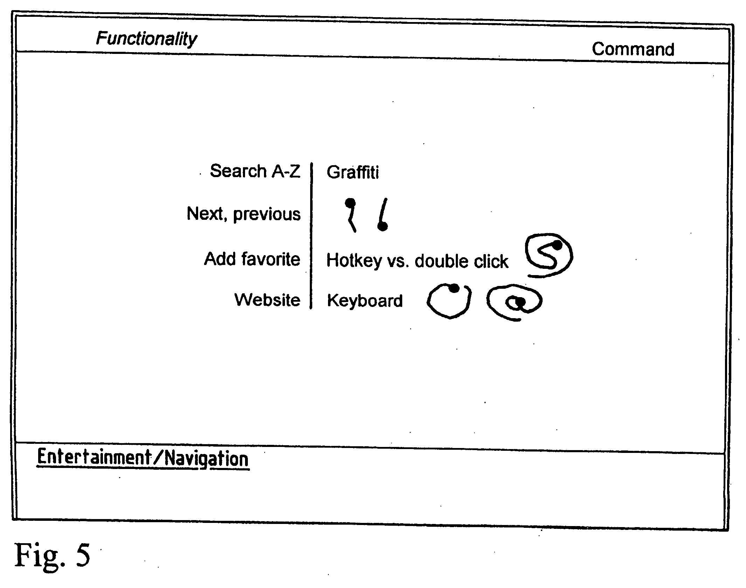

The control context shown in Fig. 5 is "Entertainment/Navigation". As in Fig. 3, functionality is listed in the left-hand column, and available command options are listed in the right-hand column. Again, some of the functionality and command options may be identical with those of other context options.

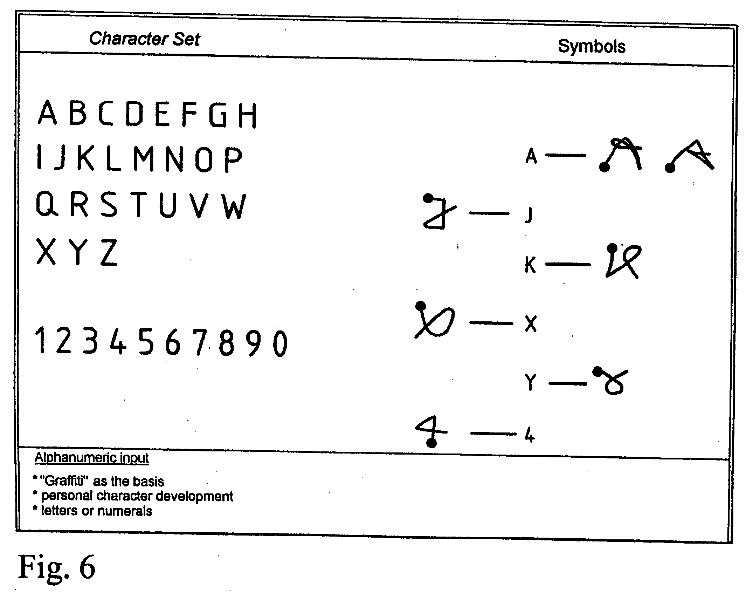

Shown in Fig. 6 are examples of alphanumeric symbols entered on touchpad 16 with a "starting dot". The starting dot use useful to further facilitate symbol recognition. As shown for examplary letter "A", different tracings would be correctly interpreted by symbol interpreter 18.

## Claims

1. A control system wherein control commands are generated by entering symbols on a touch-sensitive input field, **characterized by**
- context selecting means for selecting one out of a plurality of different control contexts and associating a limited set of valid symbols with a selected control context; and
- a symbol interpreter capable of recognising a symbol entered on the surface of the input field by tracing a rough line with a fingertip, by comparing the line with the set of valid symbols associated with the selected control context.

2. The control system according to Claim 1, wherein a starting point of a line traced on the input field is defined by detecting an initial point of contact that remains stationary for a predetermined period of time on the order of a fraction of a second.

3. The control system according to Claim 1 or Claim 2, wherein the sets of symbols include symbols that are associated with typified control functions.

4. The control system according to Claim 3, wherein the typified control functions are selected among the group of commands comprising:
- enter
- skip
- delete
- insert
- scroll
- page up
- page down
- to top
- to bottom.

5. The control system according to one of the preceding claims, wherein the symbols comprise alphanumeric symbols.

6. The control system according to any of the preceding claims, wherein sets of valid symbols associated with different control contexts are retrieved from a database.

7. The control system according to any of the preceding claims, wherein a controller receives input from the symbol interpreter and from a keyboard.

8. The control system according to any of the preceding claims, wherein a controller receives input from the symbol interpreter and from a speech control unit.
